# FASCICULE DE BREVET EUROPEEN

(11) **EP 0 665 927 B1**
(45) Date de publication et mention de la délivrance du brevet: **26.06.1996**
(21) Numéro de dépôt: 93921993.7
(22) Date de dépôt: 05.10.1993
(51) Int. Cl.: F16D 65/22

(54) **FREIN A TAMBOUR A ACTIONNEMENT MECANIQUE**
MECHANISCH BEDIENTE TROMMELBREMSE
MECHANICALLY OPERATED DRUM BRAKE

(30) Priorité: 30.10.1992 FR 9213049
(43) Date de publication de la demande: 09.08.1995
(73) Titulaire: ALLIEDSIGNAL EUROPE SERVICES TECHNIQUES, 93700 Drancy (FR)
(72) Inventeur: MERY, Jean-Claude, F-93320 Pavillons-sous-Bois (FR); PRESSACO, Pierre, F-93120 La Courneuve (FR)
(86) Numéro de dépôt international: FR9300978
(87) Numéro de publication internationale: WO9410473

(56) Documents cités:
- AT-B- 145 700
- FR-A- 2 536 142
- US-A- 3 757 908

## Description

La présente invention concerne les freins à tambour à actionnement mécanique, cette commande mécanique constituant un moyen auxiliaire d'actionnement du frein à tambour qui possède déjà un moteur principal de frein, par exemple hydraulique, la commande mécanique constituant un frein de parc ou un frein de secours.

Plus précisément, l'invention concerne un frein à tambour comprenant : une plaque support ; des premier et second segments montés coulissants sur sur la plaque support et comportant chacun une âme et une jante, chaque jante présentant en regard du tambour une face portant une garniture de friction ; un dispositif d'actionnement hydraulique, propre à agir sur une première extrémité de l'âme de chaque segment pour appliquer sa garniture de friction contre le tambour ; une première entretoise, de longueur variable, disposée entre les segments au voisinage de la première extrémité de leurs âmes respectives, pour déterminer l'écartement de ces segments ; une pièce d'appui solidaire de la plaque support et propre à servir d'appui à la seconde extrémité de l'âme de chaque segment ; et un dispositif d'actionnement mécanique.

Généralement, ce dispositif d'actionnement mécanique comprend un levier articulé à l'une de ses extrémités sur l'âme d'un des segments et comportant, en un point intermédiaire proche de cette articulation, une encoche prévue pour coopérer avec l'entretoise de longueur variable et permettre de solliciter en écartement les segments sous l'action d'un câble de manoeuvre accroché à l'autre extrémité du levier.

Une telle disposition des actionneurs hydraulique et mécanique, connue dans la technique sous l'expression "à segments flottants", en raison de l'absence d'ancrage des âmes des segments sur la pièce d'appui solidaire de la plaque support, impose de disposer pour l'actionneur mécanique d'une force d'actionnement très importante.

On connaît, par exemple du document FR-A-2 536 142, d'autres dispositions de freins à tambour, connues dans la technique sous l'expression "duo servo", qui sont dépourvues de pièce d'appui entre les extrémités des âmes des segments qui sont alors articulés l'une sur l'autre. De tels freins ont une efficacité très élevée mais une stabilité très médiocre lors de leur actionnement hydraulique, et conduisent à des usures des garnitures de friction très déséquilibrées.

La présente invention a donc pour but de réaliser un frein à tambour présentant les avantages des deux dispositions rappelées ci-dessus sans en présenter les inconvénients.

Dans ce but, l'invention propose de réaliser un frein à tambour de conception à segments flottants lorsqu'il est actionné hydrauliquement, et de conception duo-servo lorsqu'il est actionné mécaniquement.

Ce but est atteint, selon l'invention, avec un dispositif d'actionnement mécanique qui comprend un premier levier d'actionnement, un second levier de répartition de forces, et une seconde entretoise disposée entre les segments au voisinage de la seconde extrémité de leurs âmes respectives, le premier levier présentant une première extrémité propre à recevoir une force d'actionnement, et une seconde extrémité qui est opposée à la première et par laquelle ce levier peut s'appuyer, sous l'effet de la force d'actionnement, contre le premier segment pour le solliciter en direction du tambour, le second levier présentant des première et seconde extrémités en appui sur les extrémités respectives des première et seconde entretoises qui se trouvent du côté du premier segment, et les premier et second leviers étant articulés l'un sur l'autre en un point d'articulation intermédiaire entre leurs extrémités respectives.

De préférence, un faible jeu existe, au repos, entre les secondes extrémités des âmes des segments et la pièce d'appui et les premier et second leviers sont disposés de part et d'autre de l'âme du premier segment.

D'autres buts, caractéristiques et avantages ressortiront clairement de la description qui suit d'un mode de réalisation de l'invention donné à titre d'exemple non limitatif, en référence aux dessins annexés sur lesquels :
- La Figure 1 représente une vue de face d'un frein à tambour réalisé conformément à la présente invention ;
- La Figure 2 représente une vue en coupe selon la ligne II-II de la Figure 1 ;
- La Figure 3 représente une vue en perspective d'un levier d'actionnement mécanique utilisé dans le frein à tambour de la Figure 1 ; et
- La Figure 4 représente une vue en perspective d'un levier de répartition de forces utilisé dans le frein à tambour de la Figure 1.

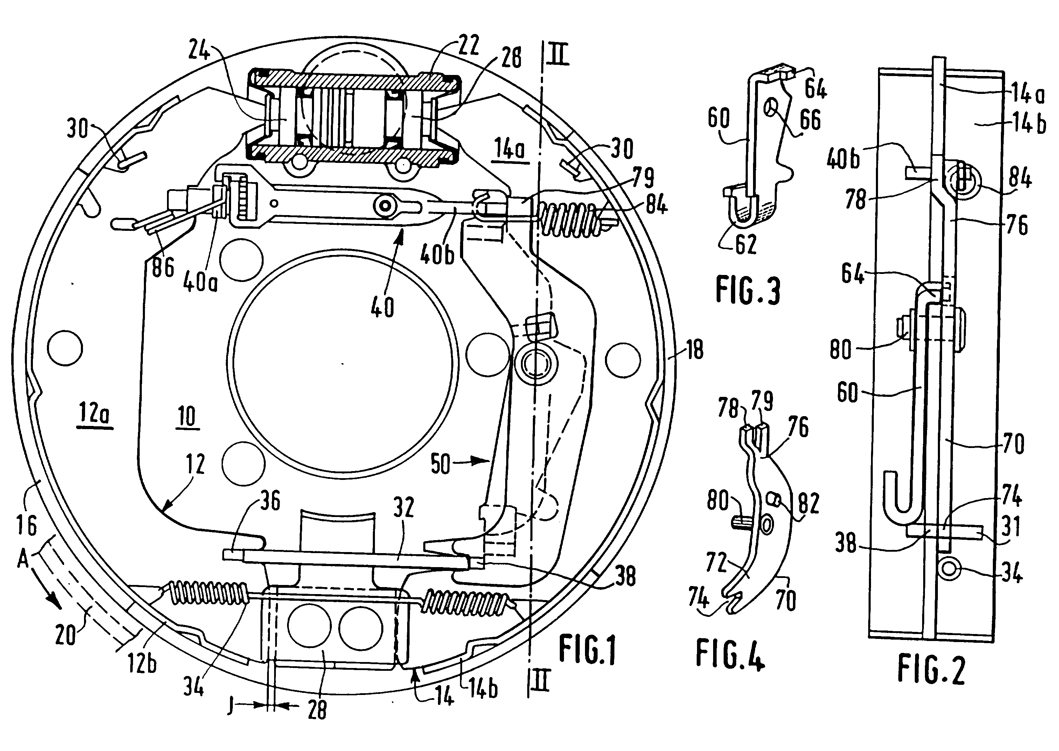

Le frein à tambour représenté sur la Figure 1 comporte une plaque support 10 constituée d'un disque approximativement plan. Cette plaque 10 est prévue pour être assujettie à une partie fixe du véhicule, telle qu'une bride d'essieu (non représenté).

Deux segments de frein 12 et 14 sont supportés de façon coulissante par le disque de la plaque support 10, grâce à des mécanismes habituels (non représentés). De façon bien connue, chacun des segments 12 et 14 comprend une âme 12a, 14a approximativement plane, sur laquelle est fixée une jante 12b, 14b en forme d'arc de cercle supportant sur sa face extérieure une garniture de friction 16 et 18 respectivement.

Les segments 12 et 14 sont placés sur la plaque support 10 de telle sorte que les enveloppes extérieures des garnitures 16 et 18 soient situées sur un même cercle dont l'axe est confondu avec l'axe de la plaque support 10.

Ainsi, les garnitures 16 et 18 peuvent venir en contact avec la surface intérieure d'un tambour de frein 20 coiffant les deux segments et représenté partiellement en traits tiretés sur la Figure 1. Le tambour 20 est concentrique avec les garnitures 16 et 18 et il est fixé à une partie tournante telle qu'une roue du véhicule (non représentée).

Un moteur de frein 22, à commande hydraulique, est fixé sur la plaque support 10, entre deux premières extrémités adjacentes des segments 12 et 14. Ce moteur de frein 22 est muni de deux pistons 24 et 26 qui fonctionnent en opposition de façon à exercer une poussée sur l'extrémité correspondante de l'âme 12a, 14a de chacun des segments, lorsque le moteur de frein est actionné.

Un bloc d'appui 28, également fixé sur la plaque support 10, est placé entre les deux autres extrémités adjacentes des segments 12 et 14.

Un ressort de traction 30 dont seules les extrémités ont été représentées est interposé entre les extrémités des âmes des segments entre lesquelles est placé le moteur de frein 22, à proximité immédiate de ce dernier, pour rapprocher ces extrémités l'une de l'autre lorsque le moteur n'est pas actionné. Une entretoise 32 de longueur fixe, dont le rôle sera explicité par la suite, est disposée entre les segments 12 et 14 au voisinage du bloc d'appui 28, approximativement parallèlement à l'axe du moteur de frein 22, et comporte à ses extrémités des échancrures 36 et 38 coopérant avec des échancrures correspondantes formées dans les âmes des segments 12 et 14 respectivement. Le maintien des extrémités des segments 12 et 14 en appui contre l'entretoise 32 est réalisé au moyen d'un ressort de traction 34 interposé entre les extrémités correspondantes des âmes des segments, à proximité immédiate de cette entretoise. Dans la position de repos représenté à la Figure 1, la distance entre le fond des encoches 36 et 38 est telle qu'un faible jeu J existe entre les extrémités des âmes 12a et 14a des segments 12 et 14 et le bloc d'appui 28.

En supposant que le tambour de frein 20 tourne dans le sens de la flèche A sur la Figure 1 lorsque le véhicule se déplace en marche avant, les segments 12 et 14 peuvent être distingués par le fait que le segment 12 prend appui sur le bloc d'appui 28 lorsqu'il est en contact de friction avec le tambour, alors que le segment 14 prend appui sur le piston 26 du moteur de frein 22 dans les mêmes conditions. Pour tenir compte de cette différence, les segments 12 et 14 sont appelés respectivement "segment comprimé" et "segment tendu".

Le frein à tambour représenté sur la Figure 1 comprend de plus une entretoise 40 disposée entre les segments 12 et 14, au voisinage du moteur de frein 22, approximativement parallèlement à l'axe de ce dernier.

L'entretoise 40 a une longueur variable et elle est équipée de moyens de réglage automatique permettant d'en accroître de façon connue la longueur au fur et à mesure de l'usure des garnitures de friction 16 et 18.

A cet effet, l'entretoise 40 comprend deux pièces terminales 40a et 40b dans lesquelles sont formées respectivement une échancrure recevant l'âme du segment 12 et une échancrure recevant l'âme du segment 14.

Des décrochements formés au niveau de l'entretoise 40 sur le bord intérieur de l'âme de chacun des segments 12 et 14 permettent de maintenir en place l'entretoise.

Un dispositif d'actionnement mécanique, désigné dans son ensemble par la référence 50, comporte un levier d'actionnement mécanique 60 et un levier de répartition de forces 70. Le levier d'actionnement 60, représenté seul sur la Figure 3, est formé d'une pièce plane de forme générale rectangulaire avec une première extrémité 62 prévue pour y accrocher un câble de manoeuvre (non représenté) et une seconde extrémité 64 formant un ergot s'étendant perpendiculairement au plan du levier 60. Une ouverture 66 est formée dans le levier 60, en un point intermédiaire proche de l'extrémité 64. Le levier de répartition de forces 70, représenté seul sur la Figure 4, est formé d'une pièce plane de forme générale rectangulaire avec une première extrémité 72 formée avec une échancrure 74 coopérant avec l'échancrure 38 formée dans l'entretoise 32. La seconde extrémité 76 est formée avec un décrochement 78 s'étendant parallèlement au plan du levier 70, et en étant décalée par rapport à la partie contiguë 79 d'une valeur voisine de l'épaisseur du levier 70. Le levier 70 porte un axe 80 s'étendant perpendiculairement à son plan, et une lumière 82 est formée à proximité de cet axe 80.

Comme on le voit mieux sur la Figure 2, les leviers 60 et 70 sont disposés de part et d'autre de l'âme 14a du segment 14, de telle façon que l'axe 80 du levier 70 pénètre dans l'ouverture 66 du levier 60, et que l'ergot 64 porte sur la tranche de l'âme 14a, de même que le décrochement 78. Les leviers 60 et 70 sont ainsi articulés l'un sur l'autre. Bien entendu, l'axe 80 pourrait être porté par le levier 60 et l'ouverture 66 pourrait être formée dans le levier 70.

Enfin, les extrémités d'un ressort de traction 84 sont accrochées respectivement sur l'âme du segment tendu 14 et sur la pièce terminale 40b, de façon à assurer un contact permanent entre le fond de l'échancrure formée dans l'âme du segment 14 et le fond de l'échancrure correspondante formée dans la pièce terminale 40b. De façon comparable, la pièce terminale 40a est sollicitée vers l'âme du segment 12 par un ressort de traction 86 dont les extrémités prennent appui respectivement sur l'âme du segment 12 et sur la pièce terminale 40a.

Le frein qui vient d'être décrit fonctionne de la façon suivante :

Au repos, les différents éléments du frein occupent les positions représentées sur la Figure 1.

Le levier de répartition de forces 70 est en appui par sa partie 79 sur l'entretoise 40, par l'échancrure 74 sur l'entretoise 32, et par l'axe 80 sur l'âme 14a du segment 14. Le levier d'actionnement 60 est en appui par l'ouverture 66 sur l'axe 80 du levier 70 et par l'ergot 64 sur l'âme 14a.

Lors d'une mise en oeuvre hydraulique du frein, la mise sous pression du moteur de frein 22 sollicite les segments 12 et 14 radialement. Le segment 14 étant par exemple en appui contre le bloc 28, le segment 12 va pivoter dans l'échancrure 36 de l'entretoise 32 pour annuler le jeu J. Lorsque les segments 12 et 14 portent tous les deux contre les surfaces du bloc d'appui 28, les garnitures de friction 16 et 18 sont amenées en contact de friction avec le tambour 20. Si un rattrapage de l'usure des garnitures de friction est nécessaire lors de cette mise en oeuvre, l'entretoise 40 s'allonge automatiquement, ses pièces terminales 40a et 40b restant au contact des âmes 12a et 14a respectivement, l'écartement des extrémités des segments 12 et 14 devenant ainsi plus important au repos qu'avant la mise en oeuvre du moteur de frein 22.

Lors d'une mise en oeuvre mécanique du frein, le levier d'actionnement 60 est sollicité vers la gauche en considérant la Figure 1, par traction de son extrémité 62.

Le levier 60 prend alors appui par son ergot 64 sur l'âme 14a du segment 14, et l'ouverture 66 coopère avec l'axe 80 pour solliciter le levier de répartition de forces 70 également vers la gauche en considérant la Figure 1.

L'ergot 64 se déplaçant librement dans l'ouverture 82 du levier 70 sollicite vers la droite en considérant la Figure 1 le segment 14 tandis que le levier 70 sollicite vers la gauche le segment 12, par l'intermédiaire des entretoises 32 et 40. Le levier 70 étant actionné par son axe 80, agit comme un palonnier sur les entretoises 32 et 40 et joue ainsi le rôle de répartir sur le segment 12 les forces appliquées par le levier 60 agissant sur le segment 14.

On voit donc bien qu'on a réalisé un frein à tambour présentant les avantages d'un frein à segments flottants lors d'une mise en oeuvre hydraulique et les avantages d'un frein duo-servo lors d'une mise en oeuvre mécanique pour un freinage de stationnement ou de secours. En effet, on obtient une grande stabilité du frein lors d'un actionnement hydraulique, et une grande efficacité lors d'un actionnement mécanique, utilisé par hypothèse pour des actions de freinage beaucoup moins fréquentes.

D'autres avantages découlent de la conception particulière du frein à tambour selon l'invention. C'est ainsi que lorsque le véhicule ainsi équipé se trouve à l'arrêt à la suite d'une mise en oeuvre hydraulique, les âmes des segments 12 et 14 sont fermement sollicitées contre le bloc d'appui 28. La force exercée sur le levier d'actionnement ne sera alors pas utilisée pour séparer les segments 12 et 14 du bloc d'appui 28, mais pour amener les différents éléments du frein dans une configuration telle que, si on relâche la pression hydraulique dans le moteur de frein 22, les segments 12 et 14 conservent leur position d'engagement de friction avec le tambour 20.

Bien entendu, l'invention n'est pas limitée au mode de réalisation qui vient d'être décrit, mais pourra recevoir les modifications qui apparaîtront à l'homme du métier. C'est ainsi que le dispositif d'actionnement 50 pourra être disposé sur le segment comprimé au lieu du segment tendu comme on l'a représenté.

## Revendications

1. Frein à tambour comprenant une plaque support (10) ; des premier et second segments (12, 14) montés coulissants sur la plaque support et comportant chacun une âme (12a, 14a) et une jante (12b, 14b), chaque jante présentant en regard du tambour (20) une face portant une garniture de friction (16, 18) ; un dispositif d'actionnement hydraulique (22), propre à agir sur une première extrémité de l'âme de chaque segment (12, 14) pour appliquer sa garniture de friction contre le tambour ; une première entretoise (40), de longueur variable, disposée entre les segments au voisinage de la première extrémité de leurs âmes respectives, pour déterminer l'écartement de ces segments ; une pièce d'appui (28) solidaire de la plaque support (10) et propre à servir d'appui à la seconde extrémité de l'âme de chaque segment ; et un dispositif d'actionnement mécanique (50), comprenant un premier levier (60) d'actionnement, un second levier (70) de répartition de forces, et une seconde entretoise (32) disposée entre les segments au voisinage de la seconde extrémité de leurs âmes respectives, le premier levier (60) présentant une première extrémité propre à recevoir une force d'actionnement, et une seconde extrémité qui est opposée à la première et par laquelle ce levier peut s'appuyer, sous l'effet de la force d'actionnement, contre le premier segment pour le solliciter en direction du tambour, le second levier (70) présentant des première et seconde extrémités en appui sur les extrémités respectives des première et seconde entretoises qui se trouvent du côté du premier segment, et les premier et second leviers étant articulés l'un sur l'autre en un point d'articulation (66, 80) intermédiaire entre leurs extrémités respectives.

2. Frein à tambour selon la revendication 1, caractérisé en ce qu'au repos, un faible jeu (J) existe entre les secondes extrémités des âmes (12a, 14a) des segments (12, 14) et la pièce d'appui (28).

3. Frein à tambour selon la revendication 2, caractérisé en ce que les premier (60) et second (70) leviers sont disposés de part et d'autre de l'âme du premier segment (14).

## Patentansprüche

1. Trommelbremse mit einer Trägerplatte (10), einer ersten und einer zweiten Backe (12, 14), die verschiebbar an der Trägerplatte angebracht sind und jeweils einen Steg (12a, 14a) und einen Kranz (12b, 14b) aufweisen, wobei jeder Kranz gegenüber der Trommel (20) eine Seite aufweist, welche einen Reibbelag (16, 18) trägt, sowie einer hydraulischen Betätigungsvorrichtung (22), welche auf ein erstes Ende des Steges jeder Backe (12, 14) einwirken kann, um deren Reibbelag an die Trommel zu drücken, einem ersten Zwischenstück (40) mit variabler Länge, welches zwischen den Backen in der Nähe des ersten Endes ihrer Stege angeordnet ist, um den Abstand zwischen den Backen zu bestimmen, einem Abstützteil (28), welches fest mit der Trägerplatte (10) verbunden ist und als Abstützung am zweiten Ende des Steges jeder Backe dienen kann, und einer mechanischen Betätigungsvorrichtung (50), welche einen ersten Betätigungshebel (60), einen zweiten Kraftverteilungshebel (70) sowie ein zweites Zwischenelement (32) enthält, welches zwischen den Backen in der Nähe des zweiten Endes ihrer Stege angeordnet ist, wobei der erste Hebel (60) ein erstes Ende aufweist, welches eine Betätigungskraft aufnehmen kann, und ein zum ersten Ende entgegengesetztes zweites Ende, mit welchem dieser Hebel sich unter der Wirkung der Betätigungskraft an der ersten Backe abstützen kann, um diese in Richtung der Trommel zu beaufschlagen, wobei der zweite Hebel (70) ein erstes und ein zweites Ende aufweist, welche sich an den entsprechenden Enden des ersten und des zweiten Zwischenelementes abstützen, welche sich auf der Seite der ersten Backe befinden, und wobei der erste und der zweite Hebel aneinander an einer Gelenkstelle (66, 80) zwischen ihren entsprechenden Enden angelenkt sind.

2. Trommelbremse nach Anspruch 1, dadurch gekennzeichnet, daß in der Ruhestellung ein geringes Spiel (J) zwischen den zweiten Enden der Stege (12a, 14a) der Backen (12, 14) und dem Abstützteil (28) vorliegt.

3. Trommelbremse nach Anspruch 2, dadurch gekennzeichnet, daß der erste Hebel (60) und der zweite Hebel (70) auf der einen und auf der anderen Seite des Steges der ersten Backe (14) angeordnet sind.

## Claims

1. Drum brake comprising a support plate (10); first and second shoes (12, 14) slidably mounted on the support plate and each one comprising a web (12a, 14a) and a rim (12b, 14b), each rim having, opposite the drum (20), a face bearing a friction lining (16, 18); a hydraulic actuation device (22), capable of acting on a first end of the web of each shoe (12, 14) to press its friction lining against the drum; a first spacer (40) of variable length arranged between the shoes in the vicinity of the first end of their respective webs, to determine the separation of these shoes; a bearing component (28) secured to the support plate (10) and capable of acting as a bearing face for the second end of the web of each shoe; and a mechanical actuation device (50), comprising a first actuating lever (60), a second force-distributing lever (70), and a second spacer (32) which is arranged between the shoes in the vicinity of the second end of their respective webs, the first lever (60) having a first end capable of receiving an actuation force, and a second end which is opposite the first and via which this lever can press, under the effect of the actuation force, against the first shoe to force it toward the drum, the second lever (70) having first and second ends bearing on the respective ends of the first and second spacers which are located on the first shoe side, and the first and second levers being articulated on one another at an articulation point (66, 80) which is intermediate between their respective ends.

2. Drum brake according to Claim 1, characterized in that, at rest, a small clearance (J) exists between the second ends of the webs (12a, 14a) of the shoes (12, 14) and the bearing component (28).

3. Drum brake according to Claim 2, characterized in that the first (60) and second (70) levers are arranged on either side of the web of the shoe (14).
